# EUROPÄISCHE PATENTANMELDUNG

(11) **EP 1 674 259 A1**
(43) Veröffentlichungstag der Anmeldung: **28.06.2006**
(21) Anmeldenummer: 05027568.4
(22) Anmeldetag: 16.12.2005
(51) Int. Cl.: B41F 13/004, H02K 7/10, B65H 27/00

(54) **Druckmaschinenwalze sowie Druckmaschinenzylinder**

(30) Priorität: 22.12.2004 DE 102004061669
(71) Anmelder: MAN Roland Druckmaschinen AG, 63012 Offenbach (DE)
(72) Erfinder: Beer, Ewald, 86179 Augsburg (DE); Eder, Maximilian, 86415 Mering (DE); Brandner, Ernst, 86554 Pöttmes (DE)
(74) Vertreter: Zacharias, Frank L.

(57) **Zusammenfassung**

Die Erfindung betrifft eine Druckmaschinenwalze sowie einen Druckmaschinenzylinder.

Einer Druckmaschinenzugwalze (10) zum Transportieren eines bahnförmigen Bedruckstoffs durch eine Druckmaschine, insbesondere durch einen Falzapparat, ist ein Antrieb (11) zum Antreiben der Druckmaschinenzugwalze (10) zugeordnet. Erfindungsgemäß ist der Antrieb (11) in die Druckmaschinenzugwalze (10) integriert.

## Beschreibung

Die Erfindung betrifft eine Druckmaschinenzugwalze nach dem Oberbegriff des Anspruchs 1. Des weiteren betrifft die Erfindung ein Druckmaschinenzugwalzenpaar nach dem Oberbegriff des Anspruchs 9 und einen Falzapparat nach dem Oberbegriff des Anspruchs 16. Weiterhin betrifft die Erfindung einen Druckmaschinenzylinder nach dem Oberbegriff des Anspruchs 17.

Druckmaschinenzugwalzen dienen dem Transport eines bahnförmigen Bedruckstoffs durch eine Druckmaschine sowie der Bahnspannungsregelung. So umfasst zum Beispiel ein Falzapparat einer Rollenrotationsdruckmaschine mehrere Druckmaschinenzugwalzenpaare aus jeweils zwei Druckmaschinenzugwalzen, die den Bedruckstoff ausgehend von einem Falztrichter auf einen Schneidmesserzylinder des Falzapparats bewegen, wobei der bahnförmige Bedruckstoff durch einen Spalt zwischen den Druckmaschinenzugwalzen der Druckmaschinenzugwalzenpaare hindurch bewegt wird. Nach dem Stand der Technik werden die Druckmaschinenzugwalzen von Motoren angetrieben, die außerhalb der Druckmaschinenzugwalzen angeordnet bzw. gelagert und mit den Druckmaschinenzugwalzen über Zahnriemen, Kupplungen bzw. Getriebe gekoppelt sind. Hierdurch ergibt sich ein hoher konstruktiver Aufwand und Montageaufwand.

Hiervon ausgehend liegt der vorliegenden Erfindung das Problem zugrunde, eine neuartige Druckmaschinenzugwalze, ein neuartiges Druckmaschinenzugwalzenpaar und einen neuartigen Falzapparat zu schaffen. Weiterhin liegt der hier vorliegenden Erfindung das Problem zugrunde, einen neuartigen Druckmaschinenzylinder zu schaffen.

Dieses Problem wird durch eine Druckmaschinenzugwalze gemäß Anspruch 1 gelöst. Erfindungsgemäß ist der Antrieb in die Druckmaschinenzugwalze integriert.

Nach einer vorteilhaften Weiterbildung der Erfindung umfasst die Druckmaschinenzugwalze eine feststehende Spindel, auf der ein Walzenkörper drehbar gelagert ist, wobei der feststehenden Spindel ständerseitige Wicklungen und dem drehbaren Walzenkörper läuferseitige Wicklungen des als Elektromotor ausgebildeten Antriebs zugeordnet sind.

Vorzugsweise ist die feststehende Spindel rohrförmig ausgebildet, wobei von außen Kabel durch die rohrförmige Spindel zu den ständerseitigen Wicklungen des Antriebs und/oder zu weiteren in die Druckmaschinenzugwalze integrierten Einrichtungen geführt sind.

Bevorzugt ist die feststehende Spindel nur einseitig an einer ebenfalls feststehenden Wand der Druckmaschine, insbesondere des Falzapparats, gelagert, wobei ein Außendurchmesser und eine Länge der Druckmaschinenzugwalze derart dimensioniert sind, dass ein Verhältnis aus Außendurchmesser und Länge groß ist, der Außendurchmesser demnach möglichst groß und die Länge möglichst klein dimensioniert ist.

Das erfindungsgemäße Druckmaschinenzugwalzenpaar ist in Anspruch 9 und der erfindungsgemäße Falzapparat ist in Anspruch 16 definiert. Der erfindungsgemäße Druckmaschinenzylinder ist in Anspruch 17 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen Querschnitt durch eine erfindungsgemäße Druckmaschinenzugwalze;
- Fig. 2:: einen Querschnitt durch ein erfindungsgemäßes Druckmaschinenzugwalzenpaar; und
- Fig. 3:: einen Querschnitt durch ein weiteres erfindungsgemäßes Druckmaschinenzugwalzenpaar.

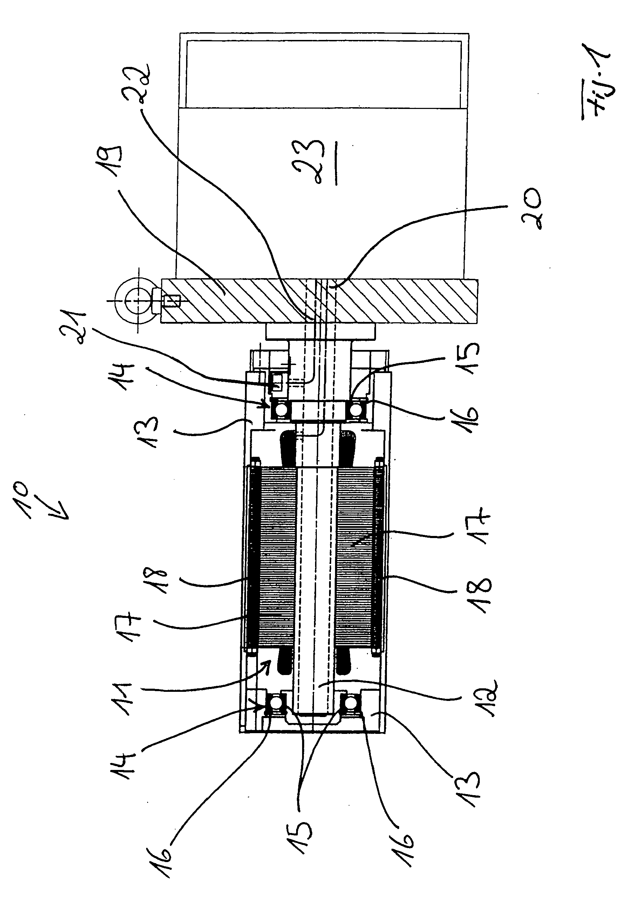

Nachfolgend wird die hier vorliegende Erfindung unter Bezugnahme auf Fig. 1 bis 3 in größerem Detail beschrieben.

Fig. 1 zeigt einen Querschnitt durch eine bevorzugte Ausführungsform einer erfindungsgemäßen Druckmaschinenzugwalze 10. Bei der Druckmaschinenzugwalze 10 kann es sich zum Beispiel um eine Zugwalze für einen Falzapparat handeln, um einen bahnförmigen Bedruckstoff zu transportieren. Die erfindungsgemäße Druckmaschinenwalze ist jedoch nicht auf den Einsatz in einem Falzapparat beschränkt. Vielmehr kann die erfindungsgemäße Druckmaschinenzugwalze auch in anderen Aggregaten einer Druckmaschine zum Einsatz kommen, so zum Beispiel in Wendeeinheiten, Druckeinheiten, Kühlwerken, Bahnführungseinheiten, Auslageeinheiten oder Falzeinheiten einschließlich des Falzaufbaus, Falzwerks und des Schaufelrads.

Im Sinne der hier vorliegenden Erfindung ist ein Antrieb 11 zum Antreiben der Druckmaschinenzugwalze 10 in die Druckmaschinenzugwalze 10 integriert. So ist im Ausführungsbeispiel der Fig. 1 die erfindungsgemäße Druckmaschinenzugwalze 10 von einer feststehenden bzw. statorseitigen Spindel 12 gebildet, auf der ein sich drehender bzw. rotorseitiger Walzenkörper 13 drehbar gelagert ist. Die Lagerung des rotorseitigen Walzenkörpers 13 auf der statorseitigen Spindel 12 erfolgt im gezeigten Ausführungsbeispiel durch Wälzlager 14, wobei ein Innenring 15 der Wälzlager 14 feststehend und ein Außenring 16 rotierend ausgebildet ist.

Wie bereits erwähnt, ist der Antrieb 11 in die erfindungsgemäße Druckmaschinenzugwalze 10 integriert. Der Antrieb 10 ist dabei vorzugsweise als Elektromotor ausgebildet, wobei ständerseitige Wicklungen 17 des Elektromotors der feststehenden, statorseitigen Spindel 12 und läuferseitige Wicklungen 18 dem sich drehenden bzw. rotorseitigen Walzenkörper 13 zugeordnet sind. Im gezeigten Ausführungsbeispiel ist demnach der Antrieb 11 der Druckmaschinenzugwalze 10 in die Druckmaschinenzugwalze 10 integriert und als sogenannter Außenläufermotor ausgebildet.

Im gezeigten Ausführungsbeispiel ist die feststehende bzw. statorseitige Spindel 12 einseitig an einer Wand 19 einer Druckmaschine gelagert. Das der Wand 19 gegenüberliegende Ende der Spindel 12 bzw. der Druckmaschinenwalze 10 steht frei im Raum und ist demnach nicht an einer Wand gelagert. Es sei an dieser Stelle darauf hingewiesen, dass die Spindel selbstverständlich auch beidseitig an einer feststehenden Wand gelagert sein kann.

Im bevorzugten Ausführungsbeispiel der Fig. 1, in welchem die feststehende bzw. statorseitige Spindel 12 lediglich einseitig an einer Wand 19 befestigt ist, sind ein Außendurchmesser und eine Länge der Druckmaschinenwalze 10 derart dimensioniert, dass das Verhältnis der Länge bezüglich des Aussendruchmessers relativ klein ist, dass also die Länge der Druckmaschinenwalze relativ kurz und der Außendurchmesser derselben relativ groß ist. Hierdurch ist es möglich, auch den Außendurchmesser der Spindel 12 zu vergrößern und somit trotz einer lediglich einseitigen Befestigung der Spindel 12 an der Wand 19 eine gute Steifigkeit der Spindel 12 zu gewährleisten, um Durchbiegungen derselben zu minimieren. Weiterhin kann bei einem möglichst großen Aussendruchmesser der Druckmaschinenzugwalze 10 der als Außenläufermotor ausgebildete Antrieb 11 derselben hochpolig gestaltet werden, sodass bei einer relativ kleinen Nenndrehzahl ein großes Drehmoment erzielt werden kann. Weiterhin kann bei einem relativ großen Außendurchmesser der Druckmaschinenzugwalze 10 auch ein Durchmesser eines Luftspalts zwischen den ständerseitigen Wicklungen 17 und den rotorseitigen Wicklungen 18 des Antriebs 11 groß gestaltet werden, wodurch ein das Drehmoment maßgeblich beeinflussender Hebelarm maximal ausgelegt werden kann.

Nach einer bevorzugten Weiterbildung der hier vorliegenden Erfindung ist die Spindel 12 der Druckmaschinenzugwalze 10 zumindest abschittsweise hohl und demnach rohrförmig ausgebildet. Dabei liegt es im Sinne der hier vorliegenden Erfindung, von außen durch die rohrförmige Spindel 12 Kabel in die Druckmaschinenwalze 10 hineinzuführen, so zum Beispiel Kabel 20, die der Stromversorgung der ständerseitigen Wicklungen 17 des Antriebs 11 dienen. In die Druckmaschinenzugwalze 10 können weitere Einrichtungen integriert sein, so zum Beispiel gemäß Fig. 1 ein Drehzahlsensor 21. Über die rohrförmig ausgebildete Spindel 12 können von außen Kabel 22 in Richtung auf den Drehzahlsensor 21 geführt werden, um denselben mit Strom zu versorgen und/oder um vom Drehzahlsensor 21 ermittelte Messsignale an eine Steuerungseinrichtung 23 der Druckmaschinenzugwalze 10 zu übermitteln. Weiterhin können in die Druckmaschinenzugwalze 10 weitere Einrichtungen integriert sein, so zum Beispiel ein Temperatursensor.

Die Steuerungseinrichtung 23 ist auf einer gegenüberliegenden Seite der Wand 19 befestigt wie die Spindel 18 der Druckmaschinenzugwalze 10. In die Steuerungseinrichtung 23 sind sämtliche Einrichtungen integriert, um die Drehzahl der Druckmaschinenzugwalze 10 im Betrieb zu steuern bzw. zu regeln. Bei diesen Baugruppen kann es sich um Sensoren, Umrichter, Regler, Versorgungseinheiten sowie weitere elektrische bzw. elektronische Baugruppen handeln.

Im Sinne der hier vorliegenden Erfindung kann durch die rohrförmig ausgebildete Spindel 12 der Druckmaschinenzugwalze 10 auch ein Kühlmittel in die Druckmaschinenzugwalze 10 hineingeführt werden, um im Betrieb Baugruppen, die in die Druckmaschinenzugwalze 10 integriert sind, zu kühlen. Das Kühlmittel wird dabei über Kühlmittelleitungen von außen in die Druckmaschinenzugwalze 10 eingeleitet und nach Kühlung der relevanten Baugruppen wieder aus der Druckmaschinenzugwalze 10 herausgeführt.

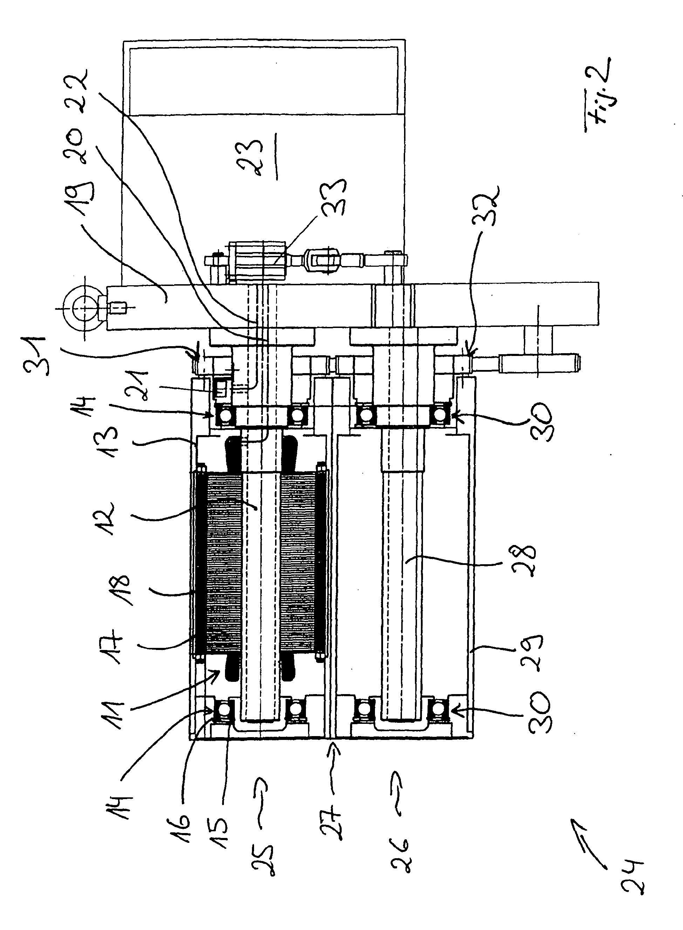

Fig. 2 zeigt ein erfindungsgemäßes Druckmaschinenzugwalzenpaar 24 aus zwei Druckmaschinenzugwalzen 25 und 26, wobei zwischen den Druckmaschinenzugwalzen 25 und 26 ein Spalt 27 ausgebildet ist, durch den ein bahnförmiger Bedruckstoff geführt werden kann, um denselben durch eine Druckmaschine zu transportieren.

Im Ausführungsbeispiel der Fig. 2 ist in eine der Druckmaschinenzugwalzen, nämlich in die obere Druckmaschinenzugwalze 25, ein Antrieb integriert, wohingegen die untere Druckmaschinenzugwalze 26 von der oberen Druckmaschinenzugwalze 25 aus angetrieben wird. Die obere Druckmaschinenzugwalze 25 des Ausführungsbeispiels der Fig. 2 entspricht hinsichtlich ihres Aufbaus der Druckmaschinenzugwalze 10 der Fig. 1, sodass hier für gleiche Baugruppen gleiche Bezugsziffern verwendet werden. Zur Vermeidung unnötiger Wiederholungen wird daher hinsichtlich der Details der Druckmaschinenzugwalze 25 auf die Ausführungen zur Druckmaschinenzugwalze 10 verwiesen.

Die obere Druckmaschinenzugwalze 25, in welche der Antrieb 11 integriert ist, ist über die rohrförmig ausgebildete Spindel 12 ortsfest an der Wand 19 der Druckmaschine gelagert. Die untere Druckmaschinenzugwalze 26 wird von der oberen Druckmaschinenzugwalze 25, in welche der Antrieb 11 integriert ist, angetrieben. So zeigt Fig. 2, dass die über die Druckmaschinenzugwalze 25 angetriebene Druckmaschinenzugwalze 26 lediglich eine feststehende bzw. statorseitige Spindel 28 und einen sich drehenden bzw. rotorseitigen Walzenkörper 29 aufweist, wobei der rotorseitige Walzekörper 29 über Wälzlager 30 an der statorseitigen Spindel 28 drehbar gelagert ist. An den rotorseitigen Walzen körpern 13 sowie 29 der beiden Druckmaschinenzugwalzen 25 und 26 greifen Zahnräder 31 bzw. 32 an, die miteinander verzahnt sind und zusammen mit dem jeweiligen Walzenkörper 13 bzw. 29 rotieren. Hierdurch kann die Rotation des Walzenkörpers 13 der Druckmaschinenzugwalze 25, die durch den in dieselben integrierten Antrieb 11 bewirkt wird, auf den Walzenkörper 29 der Druckmaschinenzugwalze 26 übertragen werden.

Die untere Druckmaschinenzugwalze 26 des Druckmaschinenzugwalzenpaars 24 ist an der Wand 19 im Unterschied zur oberen Druckmaschinenzugwalze 25 nicht ortsfest, sondern vielmehr verschiebbar bzw. verstellbar gelagert. So greift an der Spindel 28 der unteren Druckmaschinenzugwalze 26 eine Verstelleinrichtung 33 an, mithilfe derer die untere Druckmaschinenzugwalze 26 relativ zur oberen, ortfesten Druckmaschinenzugwalze 25 in radialer Richtung verschoben werden kann, um so den Spalt 27 zwischen den beiden Druckmaschinenzugwalzen 25 und 26 zum Beispiel an sich verändernde Dicken eines zu transportierenden Bedruckstoffs anzupassen.

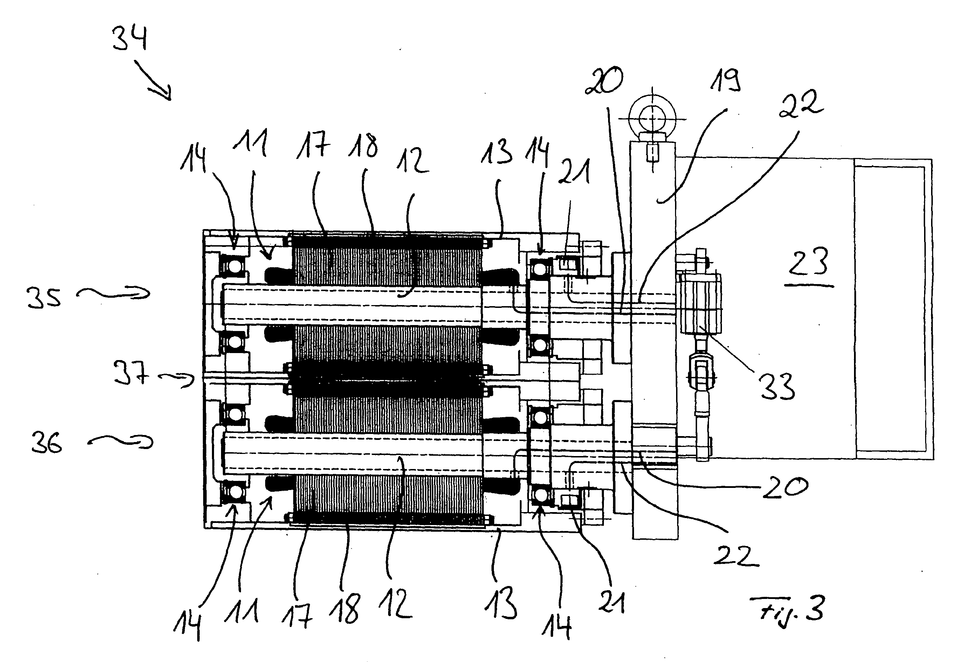

Ein weiteres Ausführungsbeispiels eines Druckmaschinenzugwalzenpaars 34, welches von zwei Druckmaschinenzugwalzen 35 und 36 gebildet ist, zeigt Fig. 3. Zwischen den Druckmaschinenzugwalzen 35 und 36 des Druckmaschinenzugwalzenpaars 34 der Fig. 3 ist wiederum ein Spalt 37 ausgebildet, um zwischen Druckmaschinenzugwalzen 35 und 36 des Druckmaschinenzugwalzenpaars 34 einen Bedruckstoff hindurch zu bewegen und so durch eine Druckmaschine zu transportieren. Im Ausführungsbeispiel der Fig. 3 ist in jede Druckmaschinenzugwalze 35 und 36 des Druckmaschinenzugwalzenpaars 34 ein Antrieb 11 integriert. Die beiden Druckmaschinenzugwalzen 35 und 36 entsprechen demnach hinsichtlich ihres Aufbaus der Druckmaschinenzugwalze 10 der Fig. 1, sodass auch hier zur Vermeidung unnötiger Wiederholungen für gleiche Baugruppen wiederum gleiche Bezugsziffern verwendet werden. Das Ausführungsbeispiel der Fig. 3 unterscheidet sich vom Ausführungsbeispiel der Fig. 2 demnach lediglich dadurch, dass im Ausführungsbeispiel der Fig. 3 in beide Druckmaschinenzugwalzen 35 und 36 jeweils ein Antrieb 11 integriert ist, sodass beide Druckmaschinenzugwalzen 35 und 36 eigenmotorisch angetrieben sind und so von der Steuerungseinrichtung 23 angesteuert werden.

Sowohl im Ausführungsbeispiel der Fig. 2 als auch im Ausführungsbeispiel der Fig. 3 können beide Druckmaschinenzugwalzen der Druckmaschinenzugwalzenpaare 24 bzw. 34 entweder mit gleichen Umfangsgeschwindigkeiten oder mit unterschiedlichen Umfangsgeschwindigkeiten angetrieben werden. Ein Antrieb der Druckmaschinenzugwalzen eines Druckmaschinenzugwalzenpaares mit unterschiedlichen Umfangsgeschwindigkeiten ist dann von Vorteil, wenn die beiden Druckmaschinenzugwalzen vom zu transportierenden Bedruckstoff unterschiedlich stark umschlungen werden. Eine Drehzahldifferenz zwischen den Druckmaschinenzugwalzen eines Druckmaschinenzugwalzenpaars ist demnach von der Umschlingung derselben durch den bahnförmigen Bedruckstoff abhängig. Druckmaschinenzugwalzen, die vom zu transportierenden Bedruckstoff stärker umschlungen sind, können so mit einer geringeren Drehzahl angetrieben werden als eine Druckmaschinenzugwalze mit kleinerer Umschlingung. Die Drehzahldifferenz bzw. Differenzgeschwindigkeit zwischen den Druckmaschinenzugwalzen eines Druckmaschinenzugwalzenpaars kann des weiteren auch von der Dicke des zu transportierenden Bedruckstoffs abhängen.

Im Sinne der hier vorliegenden Erfindung ist es möglich, dass in die Steuerungseinrichtung 23 ein Regelalgorithmus für die Antriebe 11 integriert ist, wobei für den Regelalgorithmus Motorströme der als Außenläufermotoren ausgebildeten Antriebe als Eingangsgrößen verwendet werden, um während des Betriebs die Drehzahlen der Druckmaschinenzugwalzen zu regeln. Umgekehrt ist es auch möglich, dass als Eingangsgrößen die Drehzahlen der Druckmaschinenzugwalzen dienen, und die Motorströme der Antriebe geregelt werden.

Wie bereits erwähnt, können die rohrförmig und damit innen hohl ausgeführten Spindeln dazu verwendet werden, um die in die Druckmaschinenzugwalzen integrierten Baugruppen zu kühlen. Ist eine Wärmeabfuhr durch Abstrahlung ausreichend, so kann auf eine derartige Kühlung auch verzichtet werden. So wird ein Teil der Wärme durch die zwischen den Druckmaschinenzugwalzen eines Druckmaschinenzugwalzenpaars zu transportierende Bedruckstoffbahn abgeführt. Eine weitere Wärmeabfuhr wird durch den zwischen den beiden Druckmaschinenzugwalzen eines Druckmaschinenzugwalzenpaars verlaufenden Luftkeil abgeführt. Wird auf das Einführen von Kühlmittel in die Druckmaschinenzugwalzen verzichtet, ist jedoch die Wärmeabfuhr durch Abstrahlung nicht ausreichend, so kann zum Beispiel außerhalb der Druckmaschinenzugwalzen ein Lüfterrad an der Wand 19 gelagert werden, dass gemeinsam mit den Druckmaschinenzugwalzen umläuft und einen gezielten Luftstrom entlang der Oberfläche der Walzenkörper erzeugt, um so die Wärmeabfuhr zu unterstützen. Es ist jedoch auch möglich, über die rohrförmige Spindel der Druckmaschinenzugwalzen ein Kühlmedium, zum Beispiel Luft oder Wasser, in die Druckmaschinenzugwalzen hineinzuführen und zur Kühlung zu verwenden.

Durch die Integration von Antrieben in Druckmaschinenzugwalzen verringert sich der konstruktive Aufbau derselben, da auf Zahnriemen und Kupplungen zum Antrieb der Druckmaschinenzugwalzen verzichtet werden kann. Ebenso kann auf eine Motorbefestigung, Konsole und Verkleidungen verzichtet werden. Der Montagaufwand verringert sich erheblich. Jede Druckmaschinenzugwalze eines Druckmaschinenzugwalzenpaars kann mit einer individuellen Drehzahl bzw. Umfangsgeschwindigkeit angetrieben werden. Durch die Erfindung wird eine modulare Bauweise in Form eines Baukastensystems ermöglicht, wodurch in einem Servicefall ein komplettes Modul ausgetauscht werden kann, um so Servicezeiten und Stillstandszeiten zu reduzieren.

Die erfindungsgemäßen Druckmaschinenzugwalzen bzw. Druckmaschinenzugwalzenpaare finden bevorzugt Verwendung in Falzapparaten einer Rollenrotationsdruckmaschine und dienen dort dem Transportieren eines bahnförmigen Bedruckstoffs von einem Falztrichter in Richtung auf einen Schneidmesserzylinder. Die Druckmaschinenzugwalzen bzw. Druckmaschinenzugwalzenpaare der hier vorliegenden Erfindung können jedoch auch an anderen Einbauorten bzw. in anderen Aggregaten einer Druckmaschine zum Einsatz kommen, so zum Beispiel in Wendeeinheiten, Druckeinheiten, Kühlwerken, Bahnführungseinheiten, Auslageeinheiten oder Falzeinheiten einschließlich des Falzaufbaus, Falzwerks und des Schaufelrads.

Auch kann die Erfindung bei einem Druckmaschinenzylinder, nämlich einem Formzylinder und/oder einem Gegendruckzylinder eines Druckwerks, zum Einsatz kommen. In diesem Fall ist dann ein Antrieb in den Formzylinder und/oder den Gegendruckzylinder integriert, wobei der jeweilige Zylinder eine feststehende Spindel aufweist, auf der ein Zylinderkörper drehbar gelagert ist, und wobei der feststehenden Spindel ständerseitige Wicklungen und dem drehbaren Zylinderkörper läuferseitige Wicklungen des als Elektromotor ausgebildeten Antriebs zugeordnet sind. Hinsichtlich der übrigen Details kann auf die Ausführungen verweisen werden, die unter Bezugnahme auf Fig. 1 bis 3 für eine Druckmaschinenzugwalze bzw. ein Druckmaschinenzugwalzenpaar getätigt wurden.

### Bezugszeichenliste

- 10: Druckmaschinenzugwalze
- 11: Antrieb
- 12: Spindel
- 13: Walzenkörper
- 14: Wälzlager
- 15: Innenring
- 16: Außenring
- 17: Wicklung
- 18: Wicklung
- 19: Wand
- 20: Kabel
- 21: Drehzahlsensor
- 22: Kabel
- 23: Steuerungseinrichtung
- 24: Druckmaschinenzugwalzenpaar
- 25: Druckmaschinenzugwalze
- 26: Druckmaschinenzugwalze
- 27: Spalt
- 28: Spindel
- 29: Walzenkörper
- 30: Wälzlager
- 31: Zahnrad
- 32: Zahnrad
- 33: Verstelleinrichtung
- 34: Druckmaschinenzugwalzenpaar
- 35: Druckmaschinenzugwalze
- 36: Druckmaschinenzugwalze
- 37: Spalt

## Patentansprüche

1. Druckmaschinenzugwalze zum Transportieren eines bahnförmigen Bedruckstoffs durch eine Druckmaschine, insbesondere durch einen Falzapparat, mit einem Antrieb (11) zum Antreiben der Druckmaschinenzugwalze (10), **dadurch gekennzeichnet, dass** der Antrieb (11) in die Druckmaschinenzugwalze (10) integriert ist.

2. Druckmaschinenzugwalze nach Anspruch 1, **gekennzeichnet durch** eine feststehende Spindel (12), auf der ein Walzenkörper (13) drehbar gelagert ist, wobei der feststehenden Spindel (12) ständerseitige Wicklungen (17) und dem drehbaren Walzenkörper (13) läuferseitige Wicklungen (18) des als Elektromotor ausgebildeten Antriebs (11) zugeordnet sind.

3. Druckmaschinenzugwalze nach Anspruch 2, **dadurch gekennzeichnet, dass** die feststehende Spindel (12) rohrförmig ausgebildet ist.

4. Druckmaschinenzugwalze nach Anspruch 3, **dadurch gekennzeichnet, dass** von außen Kabel (20) durch die rohrförmige Spindel (12) zu den ständerseitigen Wicklungen (17) des Antriebs geführt sind.

5. Druckmaschinenzugwalze nach Anspruch 3 oder 4, **dadurch gekennzeichnet, dass** von außen Kabel (22) durch die rohrförmige Spindel (12) zu weiteren in die Druckmaschinenzugwalze integrierten Einrichtungen (21), insbesondere zu einem Drehzahlsensor und/oder einem Temperatursensor, geführt sind.

6. Druckmaschinenzugwalze nach einem oder mehreren der Ansprüche 3 bis 5, **dadurch gekennzeichnet, dass** von außen Kühlmittelleitungen durch die rohrförmige Spindel (12) geführt sind.

7. Druckmaschinenzugwalze nach einem oder mehreren der Ansprüche 2 bis 6, **dadurch gekennzeichnet, dass** die feststehende Spindel (12) einseitig an einer ebenfalls feststehenden Wand (19) der Druckmaschine, insbesondere des Falzapparats, gelagert ist.

8. Druckmaschinenzugwalze nach einem oder mehreren der Ansprüche 1 bis 7, **dadurch gekennzeichnet, dass** ein Außendurchmesser und eine Länge der Druckmaschinenzugwalze derart dimensioniert sind, dass ein Verhältnis aus Außendurchmesser zu Länge groß ist und demnach der Außendurchmesser möglichst groß und die Länge möglichst klein dimensioniert ist.

9. Druckmaschinenzugwalzenpaar aus zwei Druckmaschinenzugwalzen, wobei zwischen den beiden Druckmaschinenzugwalzen (25, 26; 35, 36) ein Spalt (27; 37) ausgebildet ist, in dem ein bahnförmiger Bedruckstoff geführt ist, um denselben durch eine Druckmaschine, insbesondere durch einen Falzapparat, zu transportieren, wobei mindestens einer Druckmaschinenzugwalze des Druckmaschinenzugwalzenpaars ein Antrieb zugeordnet ist, **dadurch gekennzeichnet, dass** in mindestens eine Druckmaschinenzugwalze (25; 35, 36) des Druckmaschinenzugwalzenpaars ein Antrieb (11) integriert ist.

10. Druckmaschinenzugwalzenpaar nach Anspruch 9, **dadurch gekennzeichnet, dass** in eine Druckmaschinenzugwalze (25) des Druckmaschinenzugwalzenpaars ein Antrieb (11) integriert ist, wohingegen eine andere Druckmaschinenzugwalze (26) von der Druckmaschinenzugwalze (25) antreibbar ist.

11. Druckmaschinenzugwalzenpaar nach Anspruch 9, **dadurch gekennzeichnet, dass** in beide Druckmaschinenzugwalzen (35, 36) des Druckmaschinenzugwalzenpaars jeweils ein Antrieb (11) integriert ist.

12. Druckmaschinenzugwalzenpaar nach einem oder mehreren der Ansprüche 9 bis 11, **dadurch gekennzeichnet, dass** die oder jede Druckmaschinenzugwalze (25; 35, 36) des Druckmaschinenzugwalzenpaars, in die ein Antrieb (11) integriert ist, nach einem oder mehreren der Ansprüche 2 bis 8 ausgebildet ist.

13. Druckmaschinenzugwalzenpaar nach einem oder mehreren der Ansprüche 9 bis 12, **dadurch gekennzeichnet, dass** eine Druckmaschinenzugwalze (25; 35) des Druckmaschinenzugwalzenpaars ortsfest an einer Wand (19) der Druckmaschine, insbesondere des Falzapparats, gelagert ist, wohingegen die andere Druckmaschinenzugwalze (24; 34) des Druckmaschinenzugwalzenpaars zur Anpassung des Spalts (27; 37) zwischen den Druckmaschinenzugwalzen an der Wand verstellbar, insbesondere verschiebbar, gelagert ist.

14. Druckmaschinenzugwalzenpaar nach einem oder mehreren der Ansprüche 9 bis 13, **dadurch gekennzeichnet, dass** die Druckmaschinenzugwalzen (25, 26; 35, 36) des Druckmaschinenzugwalzenpaars (24; 34) mit unterschiedlichen Drehzahlen antreibbar sind.

15. Druckmaschinenzugwalzenpaar nach Anspruch 14, **dadurch gekennzeichnet, dass** eine Drehzahldifferenz zwischen den Druckmaschinenzugwalzen von der Umschlingung derselben durch den bahnförmigen Bedruckstoff und /oder von der Dicke des Bedruckstoffs abhängig ist.

16. Falzapparat einer Druckmaschine, mit Druckmaschinenzugwalzenpaare bildenden Druckmaschinenzugwalzen, wobei die Druckmaschinenzugwalzen bzw. die Druckmaschinenzugwalzenpaare einen in einem Falztrichter mit einem Längsfalz vorgefalzten, bahnförmigen Bedruckstoff in Richtung auf einen mit einem Schneidmesserzylinder zusammenwirkenden Falzmesserzylinder transportieren, wobei am Schneidmesserzylinder Exemplare vom Bedruckstoff abtrennbar sind, und wobei abgetrennte Exemplare vom Falzmesserzylinder in Richtung auf einen Falzklappenzylinder bewegbar und unter Ausbildung eines Querfalzes an den Falzklappenzylinder übergebbar sind, **dadurch gekennzeichnet, dass** die Druckmaschinenzugwalzen mindestens eines Druckmaschinenzugwalzenpaars nach einem oder mehreren der Ansprüche 9 bis 15 ausgebildet ist.

17. Druckmaschinenzylinder, nämlich Formzylinder oder Gegendruckzylinder eines Druckwerks, mit einem Antrieb zum Antreiben des Druckmaschinenzylinders, **dadurch gekennzeichnet, dass** der Antrieb in den Druckmaschinenzylinder integriert ist.

18. Druckmaschinenzylinder nach Anspruch 17, **gekennzeichnet durch** eine feststehende Spindel, auf der ein Zylinderkörper drehbar gelagert ist, wobei der feststehenden Spindel ständerseitige Wicklungen und dem drehbaren Zylinderkörper läuferseitige Wicklungen des als Elektromotor ausgebildeten Antriebs zugeordnet sind.

19. Druckmaschinenzylinder nach Anspruch 17 oder 18, **gekennzeichnet durch** Merkmale nach einem oder mehreren der Ansprüche 3 bis 9.
